# EUROPEAN PATENT APPLICATION

(11) **EP 3 135 121 A1**
(43) Date of publication of application: **01.03.2017**
(21) Application number: 16460061.1
(22) Date of filing: 30.08.2016
(51) Int. Cl.: A23L 7/109, A23L 33/21

(54) **NOODLES AND A METHOD FOR THE PREPARATION OF NOODLES**

(30) Priority: 31.08.2015 PL 41376515
(71) Applicant: Silcar Sp. z o.o., 40-094 Katowice (PL)
(72) Inventor: Wyrwisz, Jaroslaw, 21-102 Ostrowek (PL); Wierzbicka, Agnieszka, 07-784 Warszawa (PL); Poltorak, Andrzej, 02-797 Warszawa (PL); Kurek, Marcin, 05-090 Raszyn (PL); Piwinska, Monika, 01-821 Warszawa (PL); Moczkowska, Malgorzata, 02-441 Warszawa (PL); Rozbicki, Jan, 05-200 Wolomin (PL); Jochymek, Pawel, 32-332 Bukowno (PL); Burzawa, Elzbieta, 32-305 Olkusz (PL); Dybal, Patryk, 43-354 Czaniec (PL)
(74) Representative: Padée, Grazyna

(57) **Abstract**

A method for the preparation of noodles from semolina, wherein an oat fibre preparation is added to the semolina, the preparation being obtained from husked oat grain, containing from 40 to 48% by wt. of dietary fibre, including from 20 to 25% by wt. of water-insoluble fractions and from 19 to 23% of water-soluble fractions, from 14 to 25% by wt. of protein, from 1 to 12% by wt. of fats, from 2 to 25% of available carbohydrates, having a humidity not higher than 12% by wt., fineness D_{[0.9]} from 100 to 300 µm, the preparation being added in the amount of from 4 to 20% by wt. of dry preparation in relation to the flour-preparation mixture, water in the amount of 32.0% by wt. to 40% by wt. in relation to the flour-preparation mixture is added to the mixture gradually at a temperature of 35°C, and then the dough obtained from the ingredients mentioned above is mixed for 1÷15 minutes. Next, the dough is extruded at a temperature of 40°C to 50°C, the extruded noodles are dried until they reach a water content of 11÷12% by wt., and then cooled. The invention also pertains to the noodles.

## Description

The invention relates to a method for the preparation of noodles, and to noodles with a high proportion of dietary fibre of oat origin.

The significant advantages of consuming products rich in dietary fibre, advantages which are being discovered in increasing numbers, provide motivation to develop and implement the production of innovative goods containing this ingredient, as well as existing high-fibre products undergoing constant improvement. Fibre-rich food, which also has a reduced calorific value, constitutes a group of functional food (Regulation (EC) No 1924/2006 of the European Parliament and of the Council of 20 December 2006 on nutrition and health claims made on foods, supplemented by the annex to the Regulation (EC) No 116/2010 of 9 February 2010), which is exceptionally needful in the construction of a proper structure of consumption of food products. A high-fibre diet (consumption of above 25 g/day) exhibits a series of potential health advantages. Specific fractions of fibre, particularly soluble fibre, may contribute to a reduction in levels of total cholesterol, LDL cholesterol, as well as triglycerides in blood, and a reduction in the risk of heart disease. Dietary fibre reduces the risk of coronary heart disease and favours the therapy of arterial hypertension, as well as that of diabetes and obesity. Dietary fibre, particularly that contained in grain products, is connected with the regulation of the activity of the digestive tract. Also, the significant effect of fibre in the reduction of large intestine diseases has been ascertained.

Noodles, together with bread and grits, are among the basic grain products. They are produced from semolina, obtained as the result of milling durum wheat *(Triticum durum),* and are characterised by good technological properties, i.e. a high protein content in the grain, a high wet gluten content (at least 27%) and a yellow-cream colour, or optionally from milling common wheat (*Triticum aestivum*)*.* However, in conventional semolina noodles, the content of dietary fibre is very low, at levels of 1.4÷2.5 g/100 g of noodles. Studies by Sobota and Skwira (2009) indicate that in conventional wheat noodles, the content of total dietary fibre ranges from 4 to 4.5% d.m.c. Similar values of total fibre (4.8÷5.3 g/100 g of noodles) have been found by Mariani-Costantini (1988).

An important factor, affecting both the health-promoting properties of bakers' products and their technological and sensory parameters, is constituted by the content of the individual fibre fractions. It is known that there are two fractions of fibre: water-insoluble (e.g. cellulose, lignins, some hemicelluloses), and water-soluble (e.g. pectins, mucilages, waxes, some hemicelluloses). Each of these fibre fractions is characterised by a different health-promoting action. The insoluble fibre swells in an aqueous medium, filling the bowels, and thus regulates peristalsis and prevents constipation. The water-soluble fibre forms a viscous gel in an aqueous medium. This property reduces the cholesterol concentration in blood, affects the regulation of glucose concentration, reduces the absorption of sugars, and creates a sensation of satiety. Therefore, the ability to affect the contents of the individual fibre fractions in the product, the fractions exhibiting a particular health-promoting effect or playing a particular functional role in the processing, is of importance.

In noodles, the insoluble fibre usually predominates, having less significance for the regulation of cholesterol and sugar levels in the organism. Thus, an increase in the supply of soluble fibre would be very desirable in terms of the health-promoting values of these sustances. However, the addition of fibre preparations significantly affects the formation of the structure, and then the texture and colour of noodles, their taste and aroma, and shelf life. Noodles of good quality should be smooth, characterised by a translucent surface, glassy fracture, amber-gold colour, and specific taste and aroma, both before and after being cooked. Moreover, they should not crumble or crack. The addition of fibre has an essential influence on the said sensory features of noodles. First of all, it is connected with the ability of the dietary fibre to bind water, gelating as well as texture-forming properties, and the proportions of the individual fibre fractions affect these parameters significantly. The hydration properties of the fibre are determined by, among other things, porosity, form and ionic strength, particle size, chemical structure, as well as the origin of the dietary fibre. Therefore, the problem to be solved consists in obtaining noodles with an increased concentration of the soluble fibre while maintaining favourable functional and sensory features, and improving the product's efficiency and yield, beneficial for health.

Also, the addition of fibre affects the course of the process of noodles' preparation. Noodles are obtained by forming dough from noodle flour, semolina or noodle grits, water, with or without the addition of eggs, forming the raw product, and then drying it. The noodle forming may by carried out by extrusion, cutting or dinking. The addition of fibre with a high portion of soluble fractions in the step of noodle dough preparation results in the introduction of significant changes at the beginning of production. The water-soluble fibre fractions absorb a high amount of water, necessary for obtaining dough with proper rheological parameters, and determining the quality of the final product. All changes in the dough's composition, as well as proportions, have a significant influence on technological parameters in the preparation process, such as pressure during extrusion, mechanical energy and extrusion rate, as well as the proper mechanical energy of the extruded products. Under industrial conditions, the pressure exerted by the extruding worm is frequently high, and amounts to 10÷11 MPa, the extruding worm diameter is about 150 mm, and its number of revolutions - 12÷15 rpm. The extruding worm chamber and the plastifying system head are equipped with a water jacket which allows for maintaining a temperature of 40°C. Replacing some of the flour with an addition of fibre with a high portion of the water-soluble fraction, resulting in dough having specific parameters, leads to the necessity for numerous changes in the noodle preparation process. On the other hand, it is important for the manufacturers of noodles that noodles with the addition of fibre can be obtained by a standard procedure or one very similar to it.

The goal of the invention is to obtain noodles with high consumer acceptability, characterised by health-promoting features thanks to a high fibre content, particularly its water-soluble fractions, preparable in a process which does not require changes in relation to the standard process. The problems defined above are solved thanks to the application of the addition of a micronised fibre preparation in the noodle preparation process, a preparation containing defined shares of the individual soluble and insoluble fractions.

The method for the preparation of noodles according to the invention is characterised by an oat fibre preparation being added to the semolina. The preparation is obtained from husked oat grain added to semolina, the preparation containing from 40 to 48% by wt. of "dietary fibre, including from 20 to 25% by wt. of water-insoluble fractions, and from 19 to 23% of water-soluble fractions, from 14 to 25% by wt. of protein, from 1 to 12% by wt. of fats, from 2 to 25% of available carbohydrates, having a humidity not higher than 12% by wt., fineness D_{[0}._{9]} from 100 µm to 300 µm, the preparation being added in the amount of from 4 to 20% by wt. of dry preparation in relation to the flour-preparation mixture. Water, in the amount of 32.0% by wt. to 40% by wt. in relation to the flour-preparation mixture, is added to the mixture gradually, ideally at a temperature of 35°C, and then the dough obtained from the ingredients mentioned above is mixed for 1-15 minutes. Next, the dough is extruded at a temperature of 40°C to 50°C and the extruded noodles are dried until they reach a water content of 11÷12% by wt., and then cooled.

The drying is best carried out in three steps. The first step consists in skin-drying at a temperature of 45-55°C for 2-8 minutes, with simultaneous shaking, in order to prevent the noodles sticking together. The second step consists in pre-drying in a hopper dryer, at a temperature of 68 to 75°C, for 60-100 minutes. The third step consists in main drying, in a hopper dryer, at a temperature of 58-65°C, until the proper humidity is reached.

The cooling step of dried noodles may be carried out at ambient temperature, or at a temperature of 10-20°C.

As a result of the so-realised process according to the invention, no-egg noodles are obtained having the following parameters: oat fibre content from 4% to 18% by wt., carbohydrate portion of 60 to 65% by wt., protein portion of 12 to 14% by wt., fat portion of 0.7 to 3.5 % by wt.

In the method according to the invention, some of the flour is replaced with a finely divided fibre preparation with a high proportion of the water-soluble fraction. Simultaneously, the proportion of water is increased. The high fineness of fibre allows for obtaining noodles with a smooth, translucent surface, glassy fracture, and colour, taste and aroma not diverging from conventional noodles. The proper addition of water allows for maintaining the production parameters of noodles with a slightly increased extrusion temperature. The noodles are characterised by high resilience and elasticity, with a reduced sticking-together effect after heat treatment, adhesion to the surface, and improved colour attractiveness because of a higher saturation of yellow colour and colour equalization in the fracture, without visible point discolourations resulting from the presence of particles of a properly micronised fibre preparation. The colour of the obtained noodles is associated by consumers with health-promoting products, and is an incentive to consume this product. The noodles have a high yield after heat treatment because of the higher incorporation of water in their structure. Moreover, a reduction in the noodles' cooking time was achieved because of the higher water content in the noodles, water being the best heat conductor in the product; and a reduction in the dry matter content loss in relation to the obtained higher product efficiency (yield), and its washing out due to the shorter duration of the cooking process. Also, due to the increased water content in the adequately constituted structure of the noodles, a state of increased elasticity and ductility at a proper tension of the noodles was obtained surprisingly and inadvertently, but exceptionally favourably, simultaneously with the increased water content, and a lower concentration of carbohydrates and proteins per 100 g of the product.

As a result, noodles with an increased share of health-promoting soluble fibre are obtained without changes to its sensory characteristics. Thanks to this fact, consumers do not have to change their habits while choosing noodles with health-promoting features.

Noodles containing a higher content of fibre have the property of a higher satiety, provided by the lower calorific value supplied, and a longer duration of metabolism due to a reduction of so-called insulin peaks and the rate of carbohydrate metabolism. This is particularly important in the process aiding the therapy of diabetes, obesity and overweight states because it allows for eliminating the sensation of hunger at a much lower dose of food, and thereby a lower dose of supplied kilocalories. The subject of the invention is presented in more detail in the following examples.

### Example

Semolina with a particle size of D_{[4}._{3]}=345 µm, humidity of 10% by wt., 32% wet gluten proportion and water activity of 0.51 was mixed with an oat fibre preparation prepared from husked oat grain having a fineness of D_{[0}._{9]} = 280 µm, with a fibre content of 44%, including 21% by wt. of water-soluble fractions and 23% by wt. of water-insoluble fractions, 20% by wt. of protein, 10% by wt. of fats, 20% of available carbohydrates, and a humidity not exceeding 10% by wt. Water was added to the mixture gradually at a temperature of 35°C with constant stirring for 5 minutes. The ready dough was extruded in an extruder with a forming die at a temperature of 42°C. The extruded noodles were skin-dried at a temperature of 50°C for 3 minutes, with simultaneous shaking, in order to prevent the noodles sticking together. Then the noodles were pre-dried in a hopper dryer in the following cycle: 14 minutes at 70°C, 40 minutes at 72°C, 26 minutes at 73°C. The next step, or main drying, was carried out in a hopper dryer in the following cycle: 26 minutes at 63°C, 150 minutes at 60°C, 160 minutes at 63°C. The drying process was carried out until a humidity of 11.3% by wt. was reached. After completion of the drying, the noodles were cooled in a cooler at a temperature of 20°C for 8 minutes, then packed.

The process described above was used to obtain noodles with raw materials as reported in Table 1. Parameters characterising the obtained products are shown in Table 2.

**Table 1**

| | **0** | **4** | **8** | **12** | **16** | **20** |
|---|---|---|---|---|---|---|
| Semolina | 1000 g | 960 g | 920 g | 880 g | 840 g | 800 g |
| Dietary fibre preparation | - | 40 g | 80 g | 120 g | 160 g | 200 g |
| water | 320.0 g | 326.0 g | 332.9 g | 339.6 g | 346.4 g | 353.3 g |

**Table 2**

| | **0** | **4** | **8** | **12** | **16** | **20** |
|---|---|---|---|---|---|---|
| Dietary fibre content [g/100g] | 2.4 | 4.1 | 7.7 | 11.4 | 14.9 | 17.02 |
| Cooking process efficiency [%] | 213.09 | 231.29 | 213.57 | 216.76 | 222.81 | 220.48 |
| Dry mass loss during cooking [%] | 2.89 | 3.15 | 2.56 | 3.06 | 3.62 | 3.98 |
| Hardness [N] | 2.25 | 2.63 | 3.24 | 3.84 | 4.71 | 4.89 |
| Elasticity [-] | 0.85 | 0.92 | 0.92 | 0.86 | 0.81 | 0.86 |

The process mentioned above was used to obtain ready noodles in three forms: conchiglie (shells), penne rigate and rotini (twists). The cooking time was 6 minutes. In all three forms of the noodles with a fibre addition, an improvement in the attractiveness of the colour of the product was observable, both before and after cooking. The resilience and elasticity of the noodles after cooking were very good, irrespective of the amount of fibre. After cooking, all three forms of the noodles were characterised by an increased palpability and interisity. Before cooking, the noodles had no deformations, and they retained their shape after cooking.

## Claims

1. A method for the preparation of noodles from semolina, wherein the semolina is mixed with water, the obtained dough is extruded and dried, **characterised in that** an oat fibre preparation is added to the semolina, the preparation being obtained from husked oat grain, containing from 40 to 48% by wt. of dietary fibre, including from 20 to 25% by wt. of water-insoluble fractions and from 19 to 23% of water-soluble fractions, from 14 to 25% by wt. of protein, from 1 to 12% by wt. of fats, from 2 to 25% of available carbohydrates, having a humidity not higher than 12% by wt., fineness D_{[0}._{**9**]} from 100 to 300 µm, the preparation being added in the amount of from 4 to 20% by wt. of dry preparation in relation to the flour-preparation mixture, water in the amount of 32.0% by wt. to 40% by wt. in relation to the flour-preparation mixture is added to the mixture gradually, and then the dough obtained from the ingredients mentioned above is mixed for 1-15 minutes. Next, the dough is extruded at a temperature of 40°C to 50°C, the extruded noodles are dried until they reach a water content of 11 ÷ 12% by wt., and then cooled.

2. The method according to claim 1, **characterised in that** the drying is carried out in three steps. The first step consists in skin-drying at a temperature of 45-55°C for 2-8 minutes, with simultaneous shaking; the second step consisting in pre-drying in a hopper dryer, at a temperature of 68 to 75°C, for 60-100 minutes; and the third step consisting in main drying, in a hopper dryer, at a temperature of 58-65°C, until the proper humidity is reached.

3. No-egg noodles with oat fibre content from 4% to 18% by wt., carbohydrate portion of 60 to 65% by wt., protein portion of 12 to 14% by wt., fat portion of 0.7 to 3.5% by wt.
